# EUROPÄISCHE PATENTSCHRIFT

(11) **EP 1 256 063 B1**
(45) Veröffentlichungstag und Bekanntmachung des Hinweises auf die Patenterteilung: **16.11.2005**
(21) Anmeldenummer: 01909541.3
(22) Anmeldetag: 30.01.2001
(51) Int. Cl.: G05B 19/418

(54) **ELEKTRISCHES GERÄT**
ELECTRICAL DEVICE
APPAREIL ELECTRIQUE

(30) Priorität: 18.02.2000 DE 10007597
(43) Veröffentlichungstag der Anmeldung: 13.11.2002
(73) Patentinhaber: SIEMENS AKTIENGESELLSCHAFT, 80333 München (DE)
(72) Erfinder: TRETTER, Albert, 92718 Schirmitz (DE); WEBER, Karl, 90518 Altdorf (DE)
(86) Internationale Anmeldenummer: PCT/DE2001/000354
(87) Internationale Veröffentlichungsnummer: WO 2001/061511

(56) Entgegenhaltungen:
- EP-A- 0 947 929
- US-A- 5 177 737
- US-A- 5 191 653

## Beschreibung

Die vorliegende Erfindung betrifft ein elektrisches Gerät zur elektrischen und kommunikativen Kopplung zweier Bussysteme.

Derartige elektrische Geräte sind allgemein z.B. als sogenannte Gateways bekannt.

Aus US 5,191,653 A ist ein bidirektionaler Busadapter bekannt, der einen Systembus mit einem IO-Bus koppelt, wobei der Systembus ein erstes Protokoll und der IO-Bus ein zweites Protokoll verwendet, wobei ein Datentransfer zwischen Geräten auf beiden Seiten des Busadapters möglich ist.

Aus US 5,177,737 A ist ein elektrisches System bekannt, bei dem ein Mehrzweckbus eingesetzt wird, der verschiedene Steckkarten, aus denen das elektrische System besteht, miteinander verbindet. Die Kommunikation der Steckkarten untereinander erfolgt dabei über den Bus, wobei der Zugriff auf den Bus zu diesem Zweck in verschiedene Zeitintervalle aufgeteilt ist. Dabei können unterschiedliche Protokolle zum Einsatz kommen.

Die Aufgabe des erfindungsgemäßen elektrischen Gerätes besteht darin, ein erstes Bussystem physikalisch mit einem zweiten Bussystem, auf dem mindestens zwei verschiedene Busprotokolle verwendbar sind, derart zu koppeln, daß eine Kommunikation ausgehend von einem an das erste Bussystem angeschlossenen Kommunikationsteilnehmer mit jedem an das zweite Bussystem angeschlossenen Kommunikationsteilnehmer, unabhängig vom Busprotokoll mit dem der an das zweite Bussystem angeschlossene Kommunikationsteilnehmer anzusprechen ist, möglich ist.

Diese Aufgabe wird mit einem elektrischen Gerät gemäß Anspruch 1 gelöst.

Das Ausführungsbeispiel beschreibt kurzgefaßt eine Möglichkeit zur Koexistenz von Profibus-PA- (PA = Prozeßautomatisierung) und FF-Geräten (FF - Fieldbus Foundation) auf einer Leitung.

Die Einführung der Feldbusse in der Prozeßindustrie wurde durch die Verfügbarkeit von Komponenten für PROFIBUS-PA beschleunigt. PROFIBUS-PA setzt auf der in der Fertigungsindustrie bereits weit verbreiteten Technologie PROFIBUS-DP auf, mit dem Unterschied, daß bei PA eine spezielle, eigensichere Übertragungstechnik nach IEC 1158-2 zum Einsatz kommt.

Neben PROFIBUS-PA, der vor allem im europäischen Raum dominiert, gewinnt in den USA die Technologie der Fieldbus Foundation (FF) an Bedeutung.

Die Anbieter von verfahrenstechnischen Steuerungssystemen wollen/müssen sowohl im europäischen als auch im amerikanischen Markt anbieten. Dabei ergibt sich nun das Problem, daß sich die Anbieter mit beiden Technologien beschäftigen müssen, um an ihre Leit- oder Steuerungssysteme sowohl PA- als auch FF-Komponenten anschließen zu können.

Von der Siemens AG wird für die "PA-Welt" bereits eine Produktlinie angeboten, die zum einen die eigensichere Welt von PROFIBUS-PA mit der Standard-Variante von PROFIBUS-DP verbindet und somit mit einem Bussystem die Vernetzung innerhalb einer verfahrenstechnischen Anlage realisiert. Dazu dient ein PA-Segmentkoppler, der die eigensicheren Bussegmente an die Standard-Physik (RS485-Physik) von PROFIBUS ankoppelt.

Eine weitere, speziell entwickelte Komponente, das PROFIBUS-PA Link, kann als Datenkonzentrator, bzw. Stellvertreter, mehrere eigensichere PA-Stränge, die mit PA-Komponenten wie Temperatur- oder Druck-Meßumformer bestückt sind, an das übergeordnete Standard PROFIBUS-Netz ankoppeln. Der Gewinn besteht darin, daß durch das PA-Link die unterschiedlichen Segmente, was die Übertragungsgeschwindigkeit betrifft, entkoppelt werden können, da PROFIBUS-PA mit einer Baudrate von 31,25KBaud spezifiziert ist, PROFIBUS-DP jedoch Baudraten in einem Bereich von 9,6KBaud bis 12MBaud unterstützt.

Der Bus der Fieldbus Foundation (FF) setzt, was die Busphysik (Schicht 1) betrifft, auch auf den Standard IEC 1158-2. Dies bedeutet, daß Feldgeräte beider Welten (PA und FF) an die gleiche Übertragungstechnik angekoppelt werden können. Die beiden Feldbusse unterscheiden sich erst ab der Schicht 2 nach dem ISO/OSI-Schichtenmodell.

Dies bedeutet aber, daß in Anlagen, bei denen Komponenten von beiden Seiten eingesetzt werden sollen/müssen, "getrennte" Busleitungen und Ankoppeleinheiten erforderlich sind.

Ein intelligentes Link soll daher die Möglichkeit schaffen, sowohl PA-Slaves als auch FF-Slaves an das übergeordnete Leitsystem mittels PROFIBUS-DP über eine gemeinsame Leitung anzukoppeln.

Die vorliegende Erfindung basiert darauf, die beiden unterschiedlichen Schicht 2 Protokolle nicht gleichzeitig abzuwickeln, sondern in einem Zeitscheibenverfahren abwechselnd (alternierend) zu bearbeiten, wobei die dynamischen Anforderungen der Slaves hinsichtlich ihrer Zeitüberwachungen dabei nicht verletzt werden dürfen.

Zu einem bestimmten Zeitpunkt ist also das PROFIBUS-Protokoll aktiv und es werden die PROFIBUS-Slaves bearbeitet, danach erfolgt die Bearbeitung der FF-Slaves in einer entsprechenden FF-Protokoll Zeitscheibe.

Weitere Merkmale, Vorteile und Anwendungsmöglichkeiten der Erfindung ergeben sich aus den Unteransprüchen, der nachfolgenden Beschreibung eines Ausführungsbeispiels, anhand der Figuren und der Figuren selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

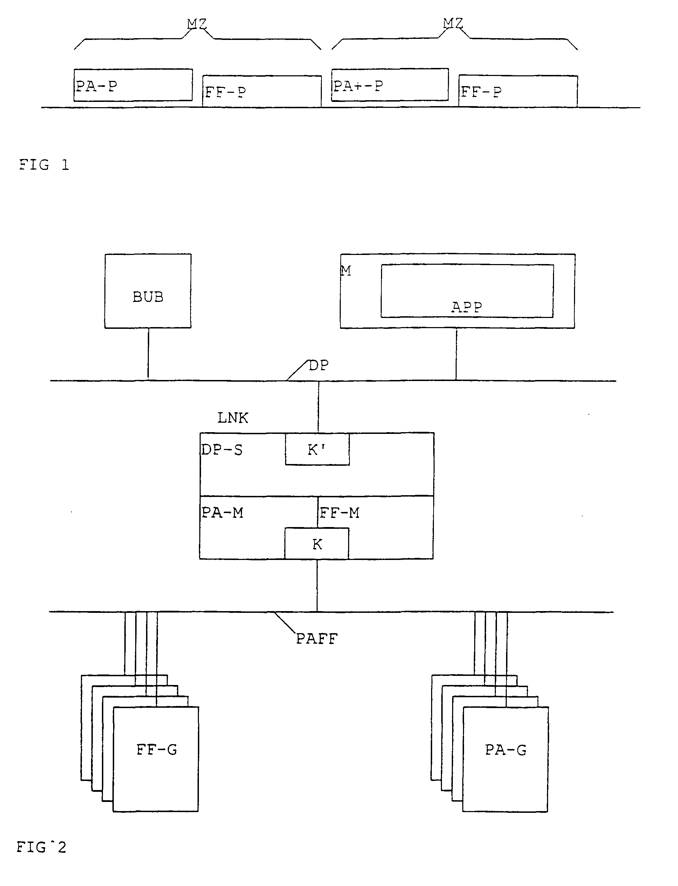

FIG 1 zeigt die Zeitscheiben der beiden unterschiedlichen Protokolle (Profibus und FF) und FIG 2 zeigt eine schematische Übersicht einer Anlage mit PA/FF-Link.

Die Realisierung des erfindungsgemäßen Links LNK setzt die Verträglichkeit der unterschiedlichen Protokolle PA-P, FF-P, sprich Telegramme auf der gemeinsamen Leitung PAFF voraus.

Durch eine zunächst theoretische Betrachtung wurde diese Verträglichkeit untersucht, mit dem Ergebnis, daß die Telegramme der 2 Protokolle anhand von spezifischen Zeichenfolgen sicher unterschieden werden können.

Es ist auch sichergestellt, daß die Feldgeräte des jeweils nicht "aktiven" Protokolls durch Telegramme des "aktiven" Protokolls nicht gestört werden, bzw. in keinen Fehlerzustand geraten.

Jeder Kommunikationsstandard legt fest, daß Telegramme, die nicht dem jeweiligen Protokoll entsprechen, als fehlerhaft zu deklarieren und somit zu verwerfen sind.

Die zeitliche Abfolge der beiden Protokolle auf dem Bus ist aus FIG 1 ersichtlich.

In einem ersten und einem zweiten in FIG 1 dargestellter. Makrozyklus MZ werden jeweils zunächst mittels des Profibus-Protokolls PA-P alle Profibus-Teilnehmer PA-G und anschließend mittels des FF-Protokolls FF-P alle FF-Teilnehmer FF-G angesprochen.

Gemäß FIG 2 umfaßt der Link LNK zumindest einen DP-Slave DP-S einen PA-Master PA-M und einen FF-Master FF-M. Anm.: Link LNK und elektrisches Gerät LNK werden synonym verwendet.

In alternativen Ausgestaltungen kann selbstverständlich auch vorgesehen sein, daß der Link LNK nicht nur zwei Master PA-M, FF-M sondern eine Vielzahl von Mastern aufweist, die jeweils ein eigenes Kommunikationsprotokoll haben.

PA-Master PA-M und FF-Master FF-M greifen über eine gemeinsame Kommunikationsschnittsteile K auf den PA/FF-Bus PAFF, an den PA-Geräte PA-G und FF-Geräte angeschlossen sind, zu. Die PA-Geräte PA-G und die FF-Geräte bieten Möglichkeiten zum Anschluß von Komponenten eines nicht dargestellten zu steuernden und/oder zu überwachenden technischen Prozesses.

Der DP-Slave DP-S greift über eine eigene Kommunikationsschnittstelle K' auf den DP-Bus DP zu bzw. ist über diese Kommunikationsschnittstelle K' von einem Master M ansprechbar. An den DP-Bus DP ist ein Gerät BUB zum Bedienen und Beobachten des technischen Prozesses angeschlossen. Ferner ist an den DP-Bus DP der DP-Master M angeschlossen, der einen Speicher aufweist, in dem ein Anwenderprogramm APP, die Applikation APP, abgespeichert ist, gemäß der die Steuerung und/oder Überwachung des technischen Prozesses erfolgt.

Die in FIG 2 dargestellten Geräte FF-G, PA-G, BUB, M weisen jeweils eigene, nicht dargestellte Schnittstellen auf, die den physikalischen Anschluß an den jeweiligen Bus PAFF, DP ermöglichen; selbstverständlich beinhaltet eine solche Schnittstelle jeweils Mittel zum Erkennen und Interpretieren der über den Bus PAFF, DP jeweils übertragenen Telegramme.

Nach einem Makrozyklus MZ sind alle am Bus PAFF befindlichen Teilnehmer FF-G, PA-G mindestens einmal angesprcchen worden. Die abgeholten Nutzdaten werden vom Link LNK gebündelt und in einem gemeinsamen Sammeltelegramm an den DP-Master M übertragen.

Durch das PA/FF-Link LNK wird zudem eine Entkopplung der langsamen, eigensicheren Bussegmente und den bis zu 12MBaud schnellen PROFIBUS-DP erreicht.

Der Anwender in der Verfahrenstechnik hat mit diesem Link LNK somit die Möglichkeit, Meßumformer von beiden Protokollwelten an seine Anlage anzuschließen.

Dies ist besonders dann wichtig, falls für bestimmte Meßverfahren, für die keine Meßumformer mit einer PROFIBUS-PA Schnittstelle existieren, einen entsprechenden Meßumformer mit einer FF-Schnittstelle verfügbar ist und eingesetzt werden soll.

Damit läßt sich die vorliegende Erfindung auch wie folgt darstellen:

Es wird ein elektrisches Gerät LNK angegeben, das Mittel DP-S, K' zur kommunikativen Verbindung mit einem Feldbus DP und weitere Mittel PA-M, FF-M, K zur kommunikativen Verbindung mit einem weiteren Feldbus PAFF aufweist. Diese Mittel sind dabei einmal die Schnittstellen K,K' selbst, wie auch die jeweiligen sogenannten Kommunikationsteilnehmer DP-S, PA-M, FF-M.

Das erfindungsgemäße elektrische Gerät stellt sich somit auch als Kombination (zumindest) dreier Kommunikationsteilnehmer DP-S, PA-M, FF-M zum jeweiligen Anschluß an einen Feldbus DP, PA, FF dar, wobei ein Kommunikationsteilnehmer DP-S, PA-M, FF-M an einen Feldbus DP, PA, FF dadurch zum Kommunikationsteilnehmer DP-S, PA-M, FF-M wird, daß er einerseits in der Lage ist, daß für den Feldbus DP, PA, FF definierte Übertragungsprotokoll DP-P, PA-P, FF-P zu erkennen um damit Nachrichten (Daten) über den Feldbus DP, PA, FF zu empfangen und andererseits in der Lage ist, Nachrichten (Daten) in dem für den Feldbus DP, PA, FF definierten Protokoll DP-P, PA-P, FF-P über den Feldbus DP, PA, FF zum Versand an einen Empfänger abzusetzen.

Das Bedienen des weiteren Feldbusses PA, FF - bzw. der an diesen angeschlossenen Geräte PA-G, FF-G - für den mindestens zwei (verschiedene) übertragungsprotokolle PA-P, FF-P vorgesehen sind, erfolgt durch das erfindungsgemäße elektrische Gerät LNK dadurch, daß es zum Ansprechen sowohl eines an den weiteren Feldbus (PAFF) angeschlossenen und mittels eines ersten Protokolls (PA-P) ansprechbaren Gerätes (PA-G) wie auch eines gleichfalls an den weiteren Feldbus (PAFF) angeschlossenen und mittels eines zweiten Protokolls (FF-P) ansprechbaren Gerätes (FF-G) geeignet ist. Diese spezielle Eignung wird für das erfindungsgemäße elektrische Gerät LNK dadurch erzielt, daß es den zumindest die Kommunikationsteilnehmer PA-M, FF-M aufweist, die jeweils geeignete Kommunikationsteilnehmer an einem PA-Bus bzw. einem FF-Bus sind.

Wenn sowohl die mittels des ersten Protokolls PA-P kommunizierenden Kommunikationsteilnehmer PA-M, PA-G wie auch die mittels des zweiten Protokolls FF-P kommunizierenden Kommunikationsteilnehmer FF-M, FF-G in einer Master-Slave/Publisher-Subscriber/Producer-Consumer-Beziehung zueinander stehen, wobei jeweils der im elektrischen Gerät LNK vorgesehene Kommunikationsteilnehmer PA-M, FF-M die Rolle des Masters/Publishers/Producers innehat, ergeben sich günstige Konstellationen hinsichtlich des Datendurchsatzes vom ersten Feldbus DP zum zweiten Feldbus PAFF.

Wenn z.B. im Applikationsprogramm APP eine Darstellung eine Vielzahl von Meßwerten eines gesteuerten und/oder überwachten externen technischen Prozesses vorgesehen ist, wobei zumindest einige der Sensoren zur Aufnahme solcher Meßwerte Geräte FF-G, PA-G sind, auf die der Profibus-DP Master M nur über das erfindungsgemäße elektrische Gerät LNK zugreifen kann, läuft die erforderliche Kommunikation grob skizziert etwa folgendermaßen ab:

Der Master M setzt zum Einleiten der Abfrage der jeweiligen Meßwerte ein Telegramm, das natürlichsprachlich formuliert etwa wie folgt lautet:
An [Empfänger1, Empfänger2, ...]:
Meßwerte übermitteln an [Sender],
über den Profibus-DP ab.

Dabei bezeichnet [Empfänger1, Empfänger2, ...] über einen Feldbus DP, PAFF erreichbare Geräte. Exemplarisch sei davon ausgegangen, daß die Geräte FF-G, FF-G' und PA-G, PA-G' als jeweils mindestens zwei an den Feldbus PAFF angeschlossene Geräte, die entweder mittels des ersten oder mittels des zweiten Übertragungsprotokolls PA-P, FF-P ansprechbar sind, adressiert werden.

Ferner bezeichnet [Sender] den Master M, der das Telegramm absetzt und der als Antwort auf das Telegramm die jeweiligen Meßwerte erwartet.

Aus speziellen Konfigurationsdaten ist die Topologie des Kommunikationsnetzwerkes bekannt und damit insbesondere die Tatsache, daß die adressierten Geräte FF-G, FF-G' und PA-G, PA-G' an den Feldbus PAFF angeschlossen sind, bekannt. Damit ist auch bereits klar, daß die adressierten Geräte FF-G, FF-G' und PA-G, PA-G' nicht direkt, sondern nur indirekt über das elektrische Gerät LNK erreichbar sind. Das vom Master M abgesetzte Telegramm wird daher zunächst an das elektrische Gerät und zwar speziell an den DP-Slave DP-S gesandt.

Hier wird das empfangene Telegramm ausgewertet, soweit es die mittels des ersten Übertragungsprotokolls (PA-P) erreichbaren Geräte PA-G, PA-G' betrifft, in geeigneter Weise an den im elektrischen Gerät LNK enthaltenen Kommunikationsteilnehmer PA-M und soweit es die mittels des zweiten Übertragungsprotokolls (FF-P) erreichbaren Geräte FF-G, FF-G' betrifft, in geeigneter Weise an den im elektrischen Gerät LNK enthaltenen Kommunikationsteilnehmer FF-M durchgereicht.

Weder der Kommunikationsteilnehmer PA-M noch der Kommunikationsteilnehmer FF-M, bei dem das Telegramm mittlerweile eingetroffen ist, sind die eigentlichen Empfänger des Telegramms. Daher werden die eingetroffenen Telegramme jetzt erneut analysiert und an die jeweiligen (End-)Empfänger PA-G, PA-G' bzw. FF-G, FF-G' versandt, wobei jetzt zum Zweck des weiteren Versendens ein Transfer in das für den weiteren Feldbus PAFF definierte Übertragungsprotokoll FF-P, PA-P erfolgt.

Auf diese Weise erreicht schließlich das ursprünglich vom Master M abgesetzte Telegramm die eigentlichen Adressaten PA-G, PA-G', FF-G, FF-G'.

Diese setzen daraufhin ein Antworttelegramm ab, das - naturlichsprachlich formuliert - etwa wie folgt lautet:
An [Empfänger]:
[Meßwert].

Hier bezeichnet [Empfänger] den Profibus-DP Master M und [Meßwert] den jeweils aufgenommenen Meßwert.

Wiederum ist aus Konfigurationsdaten ersichtlich, daß die Nachricht, um zum Master M zu gelangen, über das elektrische Gerät LNK geleitet werden muß.

Die günstigen Konstellationen hinsichtlich des Datendurchsatzes resultieren jetzt daraus, daß die Kommunikationsteilnehmer PA-M, FF-M des elektrischen Gerätes aufgrund ihrer Eigenschaft, Master/Publisher/Producer - wobei diese Begriffe in der Fachliteratur häufig synonym verwendet werden - zu sein, die angeforderten Daten quasi bei den eigentlich adressierten Geräte PA-G, PA-G', FF-G, FF-G' "einsammeln" und diese dann quasi "en bloc" für den Master M bereitstellen können, denn der Master M greift auf den dritten Kommunikationsteilnehmer DP-S in seiner Eigenschaft als Master zu und nimmt von diesem die bereitgestellten Daten entgegen.

## Patentansprüche

1. Elektrisches Gerät (LNK) mit einer ersten Kommunikationsschnittstelle (K')und mit einem ersten Kommunikationsteilnehmer (DP-S) zur kommunikativen Verbindung mit einem ersten Bus (DP) und mit einer zweiten Kommunikationsschnittstelle (K) und mit weiteren Kommunikationsteilnehmern (PA-M, FF-M) zur kommunikativen Verbindung mit einem weiteren Bus (PAFF),
**dadurch gekennzeichnet, dass** der erste und der weitere Bus Feldbusse sind, und dass das elektrische Gerät (LNK) sowohl zum Ansprechen eines an den weiteren Feldbus (PAFF) angeschlossenen und mittels eines ersten Protokolls (PA-P) ansprechbaren ersten Geräts (PA-G), wie auch zum Ansprechen eines gleichfalls an den weiteren Feldbus (PAFF) angeschlossenen und mittels eines zweiten Protokolls (FF-P) ansprechbaren zweiten Geräts (FF-G) angepasst ist, wobei das Ansprechen des mittels des ersten Protokolls (PA-P) ansprechbaren ersten Geräts (PA-G) und das Ansprechen des mittels des zweiten Protokolls (FF-P) ansprechbaren zweiten Geräts (FF-G) in einem Zeitscheibenverfahren alternierend erfolgt und wobei die zweite Kommunikationsschnittstelle (K) zum gemeinsamen Zugriff der weiteren Kommunikationsteilnehmer (PA-M, FF-M) auf den weiteren Feldbus (PAFF) und die jeweils dem Protokoll des Kommunikationsteilnehmers zugeordneten, an den weiteren Feldbus (PAFF) angeschlossenen Geräte (PA-G, FF-G) angepasst ist.

2. Elektrisches Gerät nach Anspruch 1, **dadurch gekennzeichnet, dass** sowohl der weitere Kommunikationsteilnehmer (PA-M), der mittels des ersten Protokolls (PA-P) mit dem ersten Gerät (PA-G), wie auch der weitere Kommunikationsteilnehmer (EF-M), der mittels des zweiten Protokolls (FF-P) mit dem zweiten Gerät (FF-G) kommuniziert, in einer Master- Slave/Publisber-Subscriber/Producer-Consumer-Beziehung mit dem jeweils zugehörigen Gerät (PA-G, FF-G) steht, wobei jeweils einer der im elektrischen Gerät (LNK) vorgesehenen weiteren Kommunikationsteilnehmer (PA-M, FF-M) die Rolle des Masters/Publishers/Producers innehat und in dieser Eigenschaft die vom Master (M) angeforderten Daten von den, an den weiteren Feldbus (PAFF) angeschlossenen Geräten (PA-G, FF-G) anfordert.

3. Elektrisches Gerät nach Anspruch 1 oder 2, **dadurch gekennzeichnet dass** das elektrische Gerät (LNK) zur gemeinsamen Kommunikation mit Profibus-Geräten und Fieldbus-Foundation-Geräten vorgesehen ist.

## Claims

1. Electrical device (LNK) with a first communications interface (K') and with a first communications component (DP-S) for a communications connection to a first bus (DP), and with a second communications interface (K) and with further communications components (PA-M, FF-M) for a communicative connection to a further bus (PAFF), **characterised in that** the first bus and the further bus are field buses, and that the electrical device (LNK) is adapted to address not only a device (PA-G) which is connected to the further field bus (PAFF) and can be addressed by means of a first protocol (PAP), but also a second device (FF-G) which is likewise connected to the further field bus (PAFF) and can be addressed by means of a second protocol (FF-P), whereby the addressing of the first device (PA-G) which can be addressed by means of the first protocol (PA-P) and the addressing of the second device (FF-G) which can be addressed by means of the second protocol (FF-P) are carried out alternately in a time-slice method, and whereby the second communications interface (K) is adapted for joint access by the further communications components (PA-M, FF-M) to the further field bus (PAFF) and the respective devices (PA-G, FF-G) assigned in each instance to the protocol of the communications component and connected to the further field bus (PAFF).

2. Electrical device according to claim 1, **characterised in that** not only the further communications component (PA-M) which communicates by means of the first protocol (PA-P) with the first device (PA-G), but also the further communications component (FF-M) which communicates by means of the second protocol (FF-M) which communicates by means of the second protocol (FF-P) with the second device (FF-G) are in a master-slave/publisher-subscriber/producer-consumer relationship with the relevant associated device (PA-F, FF-G), whereby in each case one of the further communications components (PA-M, FF-M) provided in the electrical deice (LNK) performs the role of master/publisher/producer and, in this capacity, requests the data requested by the master (M) from the devices (PA-G, FF-G) connected to the further field bus (PAFF).

3. Electrical device according to claim 1 or 2, **characterised in that** the electrical device (LNK) is provided for common communication with profibus devices and Fieldbus Foundation devices.

## Revendications

1. Appareil électrique (LNK) comportant une première interface de communication (K') et un premier utilisateur de communication (DP-S) pour la liaison de communication avec un premier bus (DP) et comportant une deuxième interface de communication (K) et d'autres utilisateurs de communication (PA-M, FF-M) pour la liaison de communication avec un autre bus (PAFF),
**caractérisé par le fait que** le premier et l'autre bus sont des bus de terrain et que l'appareil électrique (LNK) est adapté aussi bien à l'adressage d'un premier appareil (PA-G) raccordé à l'autre bus (PAFF) et adressable au moyen d'un premier protocole (PA-P) qu'à l'adressage d'un deuxième appareil (FF-G) également raccordé à l'autre bus (PAFF) et adressable au moyen d'un deuxième protocole (FF-P), l'adressage du premier appareil (PA-G) adressable au moyen du premier protocole (PA-P) et l'adressage du deuxième appareil (FF-G) adressable au moyen du deuxième protocole (FF-P) s'effectuant en alternance selon un procédé à créneaux temporels et la deuxième interface de communication (K) étant adaptée à l'accès commun des autres utilisateurs de communication (PA-M, FF-M) à l'autre bus de terrain (PAFF) et aux appareils (PA-G, FF-G) associés respectivement au protocole de l'utilisateur de communication et raccordés à l'autre bus de terrain (PAFF).

2. Appareil électrique selon la revendication 1,
**caractérisé par le fait que** l'autre utilisateur de communication (PA-M) qui communique avec le premier appareil (PA-G) au moyen du premier protocole (PA-P) ainsi que l'autre utilisateur de communication (FF-M) qui communique avec le deuxième appareil (FF-G) au moyen du deuxième protocole (FF-P) sont dans une relation maître / esclave, éditeur / abonné ou producteur / consommateur avec l'appareil respectivement associé (PA-G, FF-G), à chaque fois l'un des autres utilisateurs de communication (PA-M, FF-M) prévu dans l'appareil électrique (LNK) jouant le rôle du maître, éditeur ou producteur et, dans ces attributions, demandant les données demandées par le maître (M) aux appareils (PA-G, FF-G) raccordés à l'autre bus (PAFF).

3. Appareil électrique selon la revendication 1 ou 2,
**caractérisé par le fait que** l'appareil électrique (LNK) est prévu pour la communication commune avec des appareils du Profibus et avec des appareils de la Field Foundation.
